# EUROPEAN PATENT SPECIFICATION

(11) **EP 0 615 884 B1**
(45) Date of publication and mention of the grant of the patent: **09.07.1997**
(21) Application number: 94830112.2
(22) Date of filing: 17.03.1994
(51) Int. Cl.: B60R 16/00, H01H 21/22

(54) **Power window safety switch**
Sichtheitsschalter für elektrische Fensterheber
Interrupteur de sécurité pour vitres électriques

(30) Priority: 17.03.1993 IT MI930208 U
(43) Date of publication of application: 21.09.1994
(73) Proprietor: CAVIS S.r.l., I-15023 Felizzano (Alessandria) (IT)
(72) Inventor: Colombo, Paolo, c/o Cavis S.r.l., I-15023 Felizzano (Alessandria) (IT)
(74) Representative: Cicogna, Franco

(56) References cited:
- DE-A- 4 012 399
- DE-U- 7 935 400
- US-A- 4 855 540

## Description

### BACKGROUND OF THE INVENTION

The present invention relates to an improved safety switch for power windows, which has been specifically designed for application to motor vehicles and the like.

As is known, the power window switches which are at present mounted on motor vehicles and the like, usually comprise a push-button, projecting from an arm element arranged on the inner surface of each door which push-button, as it is pressed, causes the windows of the motor vehicle to be moved upwardly or downwardly.

This push-button, however, because of its position, can be accidentally pressed by a person in the motor vehicle compartment, thereby accidentally operating the windows.

This may be very dangerous, mainly if in the compartment of the motor vehicle there are present small children.

The document DE-A-4 012 399 discloses a switch having substantially the features of the preamble of the main Claim, this switch being substantially of the blade type and does not provide means for preventing the switch from being accidentally operated.

### SUMMARY OF THE INVENTION

Accordingly, the aim of the present invention is to overcome the above disclosed drawback, by providing an improved safety switch for power windows, specifically designed for application on motor vehicles and the like, which prevents the persons present in the compartment of the motor vehicle from accidentally operating the windows.

Within the scope of the above aim, a main object of the present invention is to provide such a power windows safety switch which is very reliable and safe in operation and which, moreover, can be easily made starting from easily available elements and materials and which, furthermore, is very competitive from a mere economic standpoint.

According to one aspect of the present invention, the above mentioned aim and objects, as well as yet other objects, which will become more apparent hereinafter, are achieved by an improved safety power window switch, specifically designed having the features of Claim 1.

### BRIEF DESCRIPTION OF THE DRAWINGS

Further characteristics and advantages of the invention will become more apparent hereinafter from the following detailed disclosure of a preferred, though not exclusive, embodiment of an improved saftety switch for power windows, specifically designed for application on motor vehicles and the like, which is illustrated, by way of an indicative, but not limitative example, in the accompanying drawings, where:

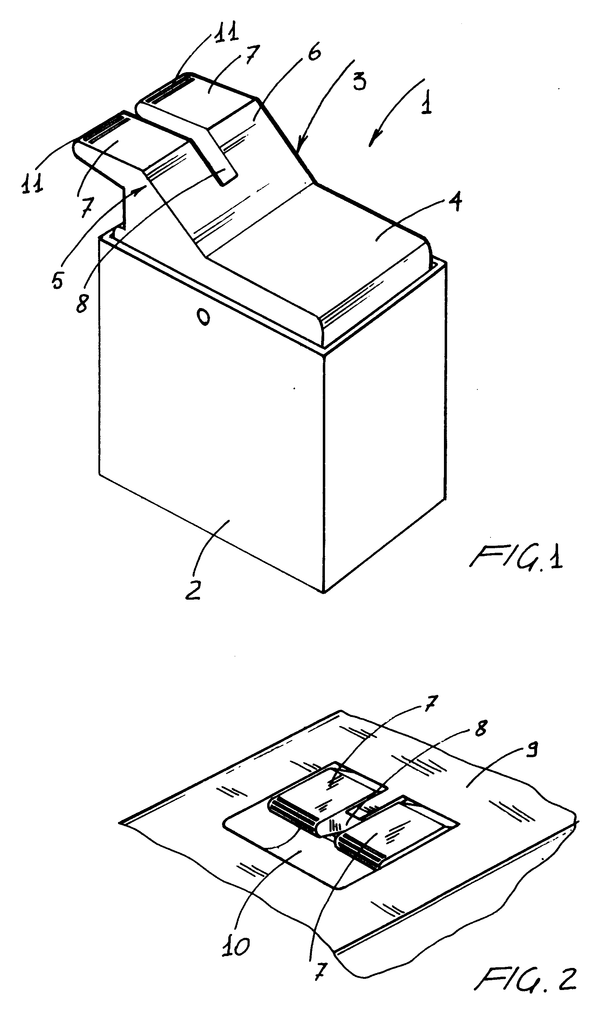

Figure 1 is a perspective view illustrating the power window safety switch according to the present invention;
Figure 2 is another perspective view illustrating the protecting template or covering element associated with the subject switch and the portion of the push-button thereof which will remain exposed to view with the template or covering element assembled on the switch;

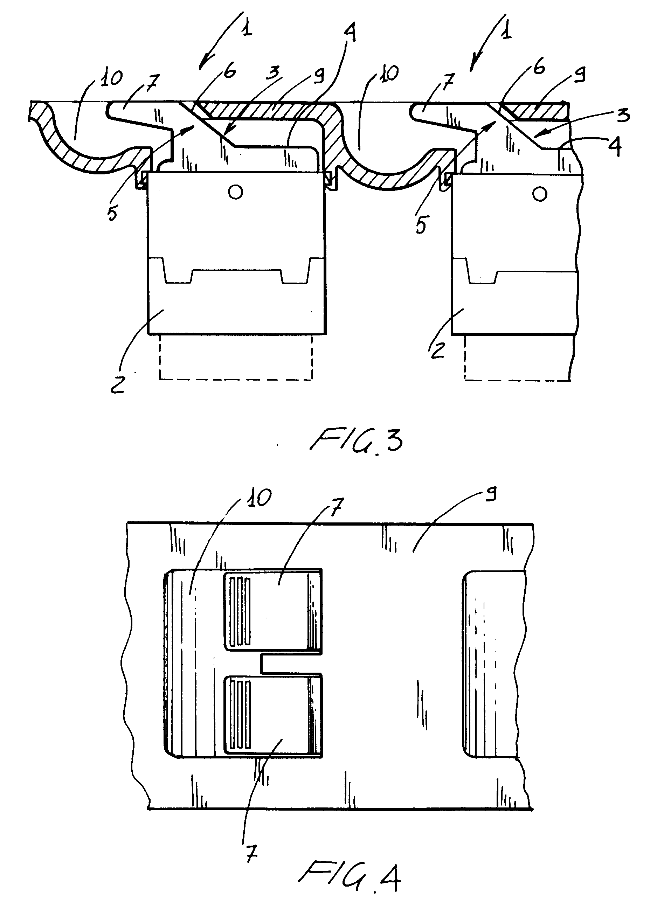

Figure 3 is a side view illustrating the switch of Figure 1, the protecting covering of the template element being specifically shown by a cross-sectional representation;
Figure 4 is a top plan view illustrating the covering element and the portion of the push button which will remain exposed to view with the covering element assembled on the switch;
Figure 5 is another side view illustrating a second embodiment of the switch driving push-button, the covering element being shown in cross-section;
   and

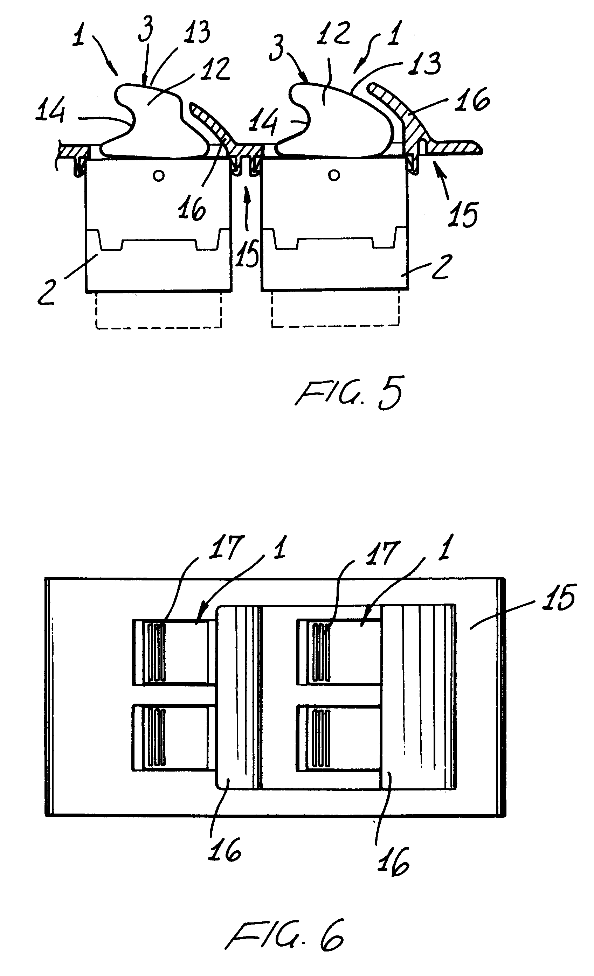

Figure 6 is a top plan view illustrating the second embodiment of the push-button for driving the switch, the protecting covering element and that portion of the mentioned push-button which will remain exposed to view with the covering element applied on the switch.

### DESCRIPTION OF THE PREFERRED EMBODIMENTS

With reference to the number references of the above mentioned figures, the improved safety power window switch, specifically designed for application on motor vehicles and the like, according to the present invention, which has been indicated generally at the reference number 1, comprises a base or supporting body 2 which, on the top thereof, supports a swinging push-button 3 pivoted about a central axis.

More specifically this swinging push-button, according to a first embodiment thereof, is provided with a flattened portion 4 and a further portion 5 comprising a slanted part 6 which, at the top thereof, is provided with flat lugs 7, preferably two flat lugs, which are separated from one another by a recess 8 and can operate, as they are upwardly pulled, the window glasses for the raising thereof.

An illuminated template or covering element 9, which is fixedly snap fitted on the switch 1, covers the push-button 3 while leaving exposed to the view only the flat lugs 7, as is shown in Figures 2 and 4.

Said covering element is assembled so as to be perfectly flat-flush with the above mentioned lugs, and at said lugs the covering element is provided with a recess 10 allowing a finger to be engaged therein in order to raise the lugs thereby causing the window to be raised.

Moreover, the above mentioned lugs are provided, on the top thereof, with knurled portions 11 to prevent the hand fingers from slipping as the lugs are subjected to a pressure in order to cause the window glass to be lowered.

The switch 1, and its related covering or template element, will be then mounted inside an arm element of the motor vehicle, so as to cause the lugs 7 and covering element 9 to be perfectly flush with respect to the arm without any projections therefrom.

In a second embodiment of the invention, over the swinging push-button 3 there is arranged a covering element 12, having a top contour 13 of a curved or partially curved configuration.

The above mentioned covering element, in particular, is provided with a groove 14 allowing a finger to be engaged therein for causing the glass window to be raised.

An illuminated template or covering element 15, fixedly snap fitted on the switch 1, is provided with a lug 16 so patterned as to cover the top profile or contour of the covering element 12, so as to cause its top end portion to be exposed to the view, for driving the downward movement of the glass window.

This top end portion is provided with knurled patterns 17 for preventing the fingers from slipping as the windows are driven downwardly.

Even in this case, the template element and the exposed top end portion of the covering element 12 will be perfectly flush with respect to the arm of the motor vehicle.

In operation, with respect to the first embodiment of the swinging push-button 3, by introducing a hand finger into the recess 10 and pulling upwardly the lugs 7, will be pressed the push-button portion 4 for raising the glass window.

This raising movement can also be driven by pushing the lugs 7 with a lateral force component.

The downward movement of the glass, on the other hand, is driven by downward pushing the pushbutton portion formed by the flat lugs 7.

The template element 9 will operate as a protecting element for the push-button portion 4 provided for closing the contact causing the window glasses to be raised.

The provision of the above mentioned template element will prevent the persons in the motor vehicle compartment from accidentally causing the glass to be raised upon accidentally pushing on the arm element.

With respect to the second embodiment of the swinging push-button 3, by introducing a hand finger inside the groove 14 and upwardly pulling the covering element 12, the window glass will be caused to be raised.

On the other hand, by downward pushing the covering element 10, the window glass will be caused to be lowered.

From the above disclosure it should be apparent that the invention fully achieves the intended aim and objects.

In particular, the fact is to be pointed out that a safety switch has been provided which is actually safe in operation and, moreover, it can also be made in an easy manner and at a very low cost.

The invention as disclosed, is susceptible to several variations and modifications all of which will come within the scope of the inventive idea as disclosed in the appended claims.

Moreover, all of the details can be replaced by other technically equivalent elements.

In practicing the invention, the used materials, provided they are compatible to the intended use, as well as the contingent size and shapes, can be any according to requirements.

## Claims

1. A power window safety switch (1), specifically designed for application on motor vehicles and the like, comprising a pivoting push button (3), the safety switch (1) being characterized by comprising a covering element (9) having an aperture through which the push button (3) can be manually operated, the covering element (9) and the push button (3) being arranged such that a portion of said push button (3) for raising the power window does not protrude beyond an outer face of the aperture of the covering element (9).

2. An improved power window switch, according to Claim 1, characterized in that it comprises a supporting body (2) which, on the top thereof, supports said pivoting push button (3).

3. An improved power window switch, according to Claims 1 and 2, characterized in that said pivoting push button (3) is provided with a flat portion (4) and a portion (5) including a slanted part (6) which, at the top, is provided with flat lugs (7), preferably two flat lugs (7), separated from one another by a recess (8) and adapted, as they are pulled upwardly or laterally pushed, to cause the window glasses to be raised.

4. An improved power window switch, according to one or more of the preceding claims, characterized in that said covering element (9) is illuminated and fixedly snap fitted on the switch (1) so as to cover said pivoting push button (3) leaving exposed to the view only the flat lugs (7).

5. An improved power window switch, according to one or more of the preceding claims, characterized in that said covering element (9) is assembled so as to be perfectly flat-flush with said lugs (7), in correspondence of which there is provided a recess (10).

6. An improved power window switch, according to one or more of the preceding claims, characterized in that said lugs (7) are provided, at the top thereof, with knurled portions (1).

7. An improved power window switch, according to one or more of the preceding claims, characterized in that the switch (1), with said related covering element (9) is mounted inside an arm element of the motor vehicle, or in any other suitable position , so as to cause said lugs (7) and said covering element (9) to be perfectly flush with respect to the arm without any projections therefrom.

8. An improved power window switch, according to one or more of the preceding claims, characterized in that said pivoting push button (3) is covered by a covering element (12) having a curved or partially curved top profile (13).

9. An improved power window switch, according to Claim 8, characterized in that said covering element (12) is provided with a groove (14) allowing a hand finger to be engaged therein for causing said window glass to be raised.

10. An improved power window switch, according to Claim 8, characterized in that said covering element (12) is illuminated and is fixedly snap fitted on said switch (1), and being provided with a lug (16) so arranged as to cover the top profile (13) of said covering element (12) while leaving exposed to the view and accessible exclusively a top end portion for causing the window glass to be lowered.

11. An improved power window switch, according to Claim 8, characterized in that said top end portion is provided with a knurled pattern.

12. An improved power window switch, according to Claims 8 to 11, characterized in that said covering element (12) and exposed top end portion thereof are flush with said arm element of said motor vehicle.

## Patentansprüche

1. Ein Sicherheitsschalter für elektrisch betriebene Fenster (1), speziell für den Einsatz in Kraftfahrzeugen und dergleichen entworfen, umfassend einen Kippschalter (3), wobei der Sicherheitsschalter (1) dadurch gekennzeichnet ist, daß er ein Abdeckelement (9) mit einer Öffnung umfaßt, durch die der Druckknopf (3) von Hand betätigt werden kann, wobei das Abdeckelement (9) und der Druckknopf (3) so angeordnet sind, daß ein Bereich dieses Druckknopfes (3) zum Anheben des elektrisch betriebenen Fensters nicht über die Außenseite der Öffnung des Abdeckelementes (9) herausragt.

2. Ein verbesserter Sicherheitsschalter für elektrisch betriebene Fenster nach Anspruch 1, dadurch gekennzeichnet, daß er einen Sockelkörper (2) umfaßt, der an seiner Spitze diesen Kippschalter (3) trägt.

3. Ein verbesserter Sicherheitsschalter für elektrisch betriebene Fenster nach den Ansprüchen 1 und 2, dadurch gekennzeichnet, daß dieser Kippschalter (3) mit einem abgeflachten Bereich (4) und einem Bereich (5) versehen ist, der einen geneigten Teil (6) umfaßt, der mit flachen Ansätzen (7), vorzugsweise zwei flachen Ansätzen (7), versehen ist, die voneinander durch eine Aussparung (8) getrennt sind, und die angepaßt sind, das Anheben der Fensterscheiben zu bewirken, wenn sie nach oben gezogen oder seitlich gedrückt werden.

4. Ein verbesserter Sicherheitsschalter für elektrisch betriebene Fenster nach einem oder mehreren der vorstehenden Ansprüche, dadurch gekennzeichnet, daß dieses Abdeckelement (9) beleuchtet und unbeweglich auf dem Schalter (1) eingerastet ist, so daß es diesen Kippschalter (3) abdeckt, wobei es nur die flachen Ansätze (7) sichtbar läßt.

5. Ein verbesserter Sicherheitsschalter für elektrisch betriebene Fenster nach einem oder mehreren der vorstehenden Ansprüche, dadurch gekennzeichnet, daß dieses Abdeckelement (9) so montiert ist, daß es vollständig bündig mit diesen Ansätzen (7) liegt, bei denen eine Vertiefung (10) bereitgestellt ist.

6. Ein verbesserter Sicherheitsschalter für elektrisch betriebene Fenster nach einem oder mehreren der vorstehenden Ansprüche, dadurch gekennzeichnet, daß diese Ansätze (7) an ihrer Spitze mit aufgerauhten Bereichen (11) versehen sind.

7. Ein verbesserter Sicherheitsschalter für elektrisch betriebene Fenster nach einem oder mehreren der vorstehenden Ansprüche, dadurch gekennzeichnet, daß der Schalter (1) mit diesem entsprechenden Abdeckelement (9) innerhalb einer Armstütze des Kraftfahrzeugs oder in irgendeiner anderen geeigneten Position montiert ist, so daß bewirkt wird, daß diese Ansätze (7) und dieses Abdeckelement (9) vollständig bündig bezüglich der Armstütze sind, ohne daß irgend etwas daraus hervorragt.

8. Ein verbesserter Sicherheitsschalter für elektrisch betriebene Fenster nach einem oder mehreren der vorstehenden Ansprüche, dadurch gekennzeichnet, daß dieser Kippschalter (3) von einem Abdeckelement (12) bedeckt wird, das einen gekrümmten oder teilweise gekrümmten oberen Umriß (13) aufweist.

9. Ein verbesserter Sicherheitsschalter für elektrisch betriebene Fenster nach Anspruch 8, dadurch gekennzeichnet, daß dieses Abdeckelement (12) mit einer Vertiefung (14) versehen ist, die ein Hineingreifen des Fingers gestattet, um ein Anheben dieser Fensterscheibe zu bewirken.

10. Ein verbesserter Sicherheitsschalter für elektrisch betriebene Fenster nach Anspruch 8, dadurch gekennzeichnet, daß dieses Abdeckelement (12) beleuchtet und unbeweglich auf diesem Schalter (1) eingerastet ist, und der mit einem Ansatz (16) versehen ist, der so angeordnet ist, daß er das obere Profil (13) dieses Abdeckelementes (12) bedeckt, während er nur einen oberen Endbereich zum Absenken der Fensterscheibe sichtbar und zugänglich läßt.

11. Ein verbesserter Sicherheitsschalter für elektrisch betriebene Fenster nach Anspruch 8, dadurch gekennzeichnet, daß dieser obere Endbereich mit einer aufgerauhten Struktur versehen ist.

12. Ein verbesserter Sicherheitsschalter für elektrisch betriebene Fenster nach den Ansprüchen 8 bis 11, dadurch gekennzeichnet, daß dieses Abdeckelement (12) und der sichtbare obere Endbereich davon bündig mit dieser Armstütze dieses Kraftfahrzeugs liegen.

## Revendications

1. Un interrupteur de sécurité (1) pour glaces à commande électrique, spécifiquement conçu pour l'application à des véhicules automobiles etc., comprenant un bouton-poussoir à bascule (3), l'interrupteur de sécurité (1) étant caractérisé en ce qu'il comprend un recouvrement (9) avec une ouverture au travers de laquelle le bouton-poussoir (3) peut être démarré manuellement, le recouvrement (9) et le bouton-poussoir (3) étant arrangés de sorte qu'une partie dudit bouton-poussoir (3), destinée à permettre la remontée de la glace à commande électrique, ne dépasse pas une surface externe de l'ouverture du recouvrement (9).

2. Un interrupteur perfectionné pour glaces à commande électrique selon la revendication 1, caractérisé en ce qu'il comprend un corps de support (2) portant, à son haut, ledit bouton-poussoir à bascule (3).

3. Un interrupteur perfectionné pour glaces à commande électrique selon les revendications 1 et 2, caractérisé en ce que ledit bouton-poussoir à bascule (3) est pourvu d'une partie plane (4) et d'une partie (5) comprenant une partie inclinée (6) qui, à son haut, est dotée de rallonges plates (7), et de préférence de deux rallonges plates (7), mutuellement séparées par un évidement (8) et adaptées à faire remonter les vitres de la fenêtre lorsqu'elles sont tirées vers le haut ou poussées latéralement.

4. Un interrupteur perfectionné pour glaces à commande électrique selon l'une ou plusieurs des revendications précédentes, caractérisé en ce que ledit recouvrement (9) est éclairé et fermement encliqueté sur l'interrupteur (1) de sorte à recouvrir ledit bouton-poussoir à bascule (3) en ne laissant exposé à l'observation que les rallonges plates (7).

5. Un interrupteur perfectionné pour glaces à commande électrique selon l'une ou plusieurs des revendications précédentes, caractérisé en ce que ledit recouvrement (9) est monté de sorte à être parfaitement à fleur desdites rallonges (7), en correspondance desquelles se trouve un évidement (10).

6. Un interrupteur perfectionné pour glaces à commande électrique selon l'une ou plusieurs des revendications précédentes, caractérisé en ce que lesdites rallonges (7) sont dotées, à leurs extrémités supérieures, de parties moletés (1).

7. Un interrupteur perfectionné pour glaces à commande électrique selon l'une ou plusieurs des revendications précédentes, caractérisé en ce que l'interrupteur (1) est monté, conjointement avec ledit recouvrement (9) qui en dépend, dans un appui-bras du véhicule automobile, ou dans une quelconque position convenable, de sorte que lesdites rallonges (7) et ledit recouvrement (9) sont parfaitement à fleur de l'appui-bras, sans aucune saillie.

8. Un interrupteur perfectionné pour glaces à commande électrique selon l'une ou plusieurs des revendications précédentes, caractérisé en ce que ledit bouton-poussoir à bascule (3) est recouvert par un chapeau (12) possédant un profil supérieur (13) recourbé ou partiellement recourbé.

9. Un interrupteur perfectionné pour glaces à commande électrique selon la revendication 8, caractérisé en ce que ledit chapeau (12) est doté d'un évidement (14) permettant l'introduction d'un doigt pour provoquer la remontée de ladite vitre de la fenêtre.

10. Un interrupteur perfectionné pour glaces à commande électrique selon la revendication 8, caractérisé en ce que ledit chapeau (12) est éclairé et fermement encliqueté sur ledit interrupteur (1), et étant doté d'une saillie (16) arrangée de sorte à recouvrir le profil supérieur (13) dudit chapeau (12), en simultanément laissant exposée à l'observation et accessible seulement une extrémité supérieure, pour l'abaissement de la vitre de la fenêtre.

11. Un interrupteur perfectionné pour glaces à commande électrique selon la revendication 8, caractérisé en ce que ladite extrémité supérieure est dotée de figures moletées.

12. Un interrupteur perfectionné pour glaces à commande électrique selon les revendications de 8 à 11, caractérisé en ce que ledit chapeau (12) et sa partie supérieure exposée sont à fleur dudit appui-bras dudit véhicule automobile.
